(19) Europäisches Patentamt

European Patent Office

Office européen des brevets

(11) Veröffentlichungsnummer: **0 281 640**
**B1**

(12) **EUROPÄISCHE PATENTSCHRIFT**

(45) Veröffentlichungstag der Patentschrift:
**25.04.90**

(21) Anmeldenummer: **87103275.1**

(22) Anmeldetag: **07.03.87**

(51) Int. Cl.⁴: **G01G 19/04**

(54) **Wägevorrichtung für die statische und dynamische Wägung von Schienenfahrzeugen.**

(43) Veröffentlichungstag der Anmeldung:
**14.09.88 Patentblatt 88/37**

(45) Bekanntmachung des Hinweises auf die Patenterteilung:
**25.04.90 Patentblatt 90/17**

(84) Benannte Vertragsstaaten:
**AT BE CH DE FR IT LI LU NL**

(56) Entgegenhaltungen:
**DE-B- 1 211 810**
**FR-A- 993 482**
**US-A- 3 168 153**
**US-A- 3 366 189**

(73) Patentinhaber: **CARL SCHENCK AG,**
**Landwehrstrasse 55 Postfach 40 18,**
**D-6100 Darmstadt(DE)**

(72) Erfinder: **Giesecke, Peter, Dr., Talstrasse 2a,**
**D-6104 Seeheim (Stettbach)(DE)**
Erfinder: **Rettig, Manfred, Eberstädter Strasse 5,**
**D-6109 Mühltal 1(DE)**

(74) Vertreter: **Brandt, Ernst-Ulrich, Fa. Carl Schenck AG**
**Patentabteilung Landwehrstrasse 55 Postfach 40 18,**
**D-6100 Darmstadt 1(DE)**

## Beschreibung

Die Erfindung betrifft eine Wägevorrichtung für die statische und dynamische Wägung von Schienenfahrzeugen gemäß dem Oberbegriff des Patentanspruchs 1.

Für statische und dynamische Wägungen von Schienenfahrzeugen sind eine ganze Anzahl von Wägevorrichtungen unterschiedlicher Art bekannt. Hierbei werden meist unterschiedliche Vorrichtungen verwendet, je nachdem ob die Wägung bei stehendem Fahrzeug (statische Wägung, Standwägung) oder bei rollendem Fahrzeug (dynamische Wägung, Fahrtwägung) durchgeführt werden soll.

Eine Wägeeinrichtung für die dynamische Wägung von Schienenfahrzeugen ist aus der US-A 3 366 189 bekannt.

Bei der dort beschriebenen Gleisfahrzeugwaage sind die Meßelemente auf der Ober- oder Unterseite der Meßschienen angeordnet. Das hat den Nachteil, daß Momente in den Abstützungen das Wägeergebnis stark beeinflussen. Deshalb ist es bei der dort beschriebenen Wägevorrichtung auch unbedingt erforderlich, daß die Abstützelemente über Gelenkelemente gelenkig mit den Auflagerpunkten verbunden sind.

Bei einer Vorrichtung zum wiegen rollender Schienenfahrzeuge (DE-OS 3 210 410) werden die Meßwertaufnehmer zwischen den Schwellen angeordnet. Die Fahrschienen sind hierbei nicht unterbrochen, jedoch muß die Länge des nicht unterstützten Schienenabschnitts zwischen zwei Schwellen größer sein als üblich. Die Signale der Meßwertaufnehmer können zu einer konstanten Summe aufsummiert werden, wenn sich die Achse eines Schienenfahrzeugs zwischen zwei Meßwertaufnehmern bewegt.

Bei einer Gewichtsmeßvorrichtung für Schienenfahrzeuge (DE-AS 1 213 134) sind die Meßwertgeber unmittelbar über den Schwellen am senkrechten Schienensteg angeordnet. Für verschiedene Wagenarten sind mehrere Meßwertgeber erforderlich, wobei ein Auswahlschalter vorgesehen ist, der für eine besondere Wagenart die erforderlichen Meßwertgeber auswählt.

Bei einer Wägevorrichtung für zweispurige Fahrzeuge, insbesondere Schienenfahrzeuge (DE-AS 1 274 369), sind von den übrigen Gleisen getrennte Fahrbahnabschnitte oder Wägeschienen vorgesehen, die an einem Ende ortsfest angelenkt und am anderen Ende auf eine Kraftmeßdose abgestützt sind. Die einander gegenüberliegenden Wägeschienen sind spiegelbildlich so angeordnet, daß das drehbare Ende der einen Wägeschiene dem auf der Kraftmeßdose abgestützten Ende der anderen Wägeschiene gegenüber liegt. Hierdurch wird erreicht, daß die Summe der Meßspannungen der Kraftmeßdosen von einander gegenüberliegenden Wägeschienen konstant ist, unabhängig von der örtlichen Lage der Fahrzeugachse auf der Wägeschiene. Wenn sich der Schwerpunkt des Fahrzeugs in der Wagenmitte befindet, entspricht die Summe der Meßwerte der Kraftmeßdosen dem Gewicht des Fahrzeugs. Bei der beschriebenen Anordnung sind besondere Gruben und Fundamente für die Wägevorrichtung erforderlich.

Es ist Aufgabe der vorliegenden Erfindung, eine Wägevorrichtung für statische und dynamische Wägungen von Schienenfahrzeugen zu schaffen, die gleich gut für Wägungen bei stehenden und bei rollenden Fahrzeugen geeignet ist, die einfach herzustellen ist und die keine aufwendigen Fundamentarbeiten erfordert. Diese Aufgabe wird durch die in den Patentansprüchen angegebenen Merkmale gelöst. Die Ansprüche erfassen auch Ausgestaltungen des Erfindungsgedankens.

Durch die Abstützung der Fahrschienen auf Meßschienen, die wiederum auf herkömmlichen Schwellen abgestützt sind und die Anordnung der Meßwertgeber an den Meßschienen ergibt sich eine überraschend einfache Wägevorrichtung, die sowohl für statische als auch für dynamische Messungen sowie für Messungen in beiden Fahrtrichtungen geeignet ist.

Durch die Verwendung einer Meßschiene können Änderungen der Meßempfindlichkeit, die durch Absenkung der Fahrschiene bei Belastung und durch Temperatureinflüsse bei verschweißten Fahrschienen entstehen, vermieden werden. Darüber hinaus können die Meßstellen an der Meßschiene durch geeignete Abdeckungen leicht gegen Umgebungseinflüsse (Temperatur, Wasser, Schmutz) geschützt werden.

Ein besonderes Fundament ist für die Vorrichtung nicht erforderlich. Es genügt, das Schotterbett und die Schwellen im Waagenbereich gerinfügig tiefer zu legen, etwa um die Höhe der Meßschienen und der Zwischenstücke für die Fahrschienen.

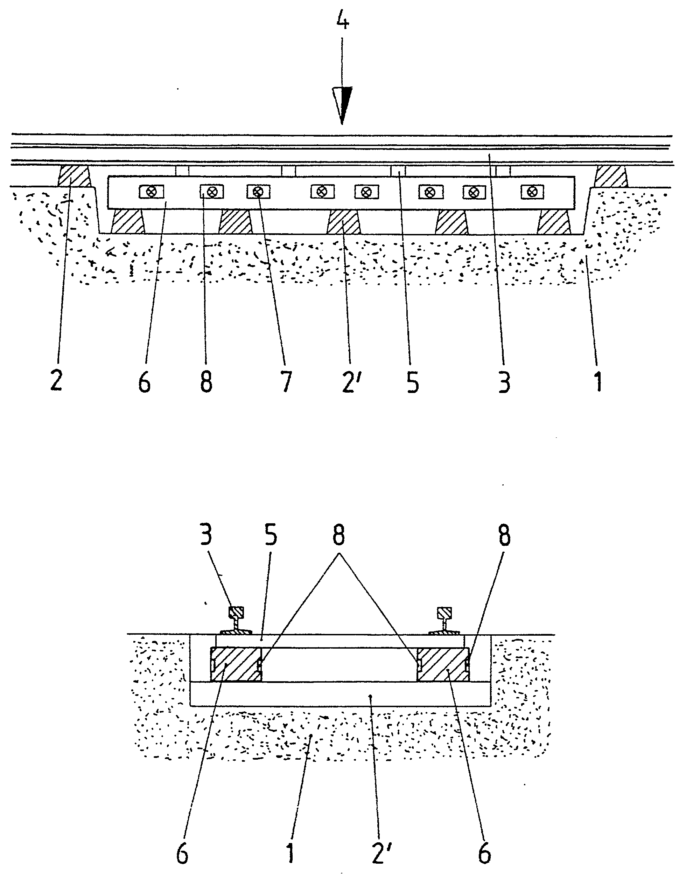

In der Zeichnung ist ein Ausführungsbeispiel der Erfindung dargestellt. Die Zeichnung zeigt in schematischer Darstellung eine Wägevorrichtung für Schienenfahrzeuge mit Meßschienen in einer Seitenansicht und im Querschnitt.

Auf einem Gleisfundament 1 sind Stützelemente in Form von Schwellen 2 angeordnet, auf denen die Fahrschienen 3 abgestützt sind. Im Bereich der Wägevorrichtung 4 sind die Fahrschienen 3 über Zwischenstücke 5 auf Meßschienen 6 abgestützt. Die Meßschienen 6 sind über Schwellen 2′ auf dem Gleisfundament 1 angeordnet. Das Gleisfundament bzw. die Schwellen 2′ liegen hierbei im Bereich der Wägevorrichtung 4 etwa um die Höhe der Meßschienen 6 und der Zwischenstücke 6 tiefer als das Gleisfundament außerhalb der Wägevorrichtung bzw. der Schwellen 2.

Die Zwischenstücke 5 sind mittig zwischen den Schwellen 2′ angeordnet. Symmetrisch zu den Zwischenstücken 5 sind zwischen zwei Schwellen 2′ taschenförmige Vertiefungen 8 beidseitig der Meßschienen 6 angebracht.

Auf den Grundflächen dieser Vertiefungen 8 werden Meßwertaufnehmer 7, z.B. Dehnungsmeßstreifen, vorzugsweise zur Schubspannungsmessung, appliziert. Die an örtlich gleicher Stelle auf beiden Seiten einer Meßschiene angebrachten Dehnungsmeßstreifen werden zu einer Vollbrücke zusammengeschaltet. Bei geringeren Genauigkeitsanforderungen ist es auch möglich, Meßwertaufnehmer 7 jeweils nur an einer Seite der Meßschienen 6 anzuordnen.

Durch Parallelschaltung der symmetrisch zu den Zwischenstücken 5 liegenden zwei Vollbrücken ergibt sich als Ausgangssignal der arithmetische Mittelwert aus beiden Meßbrücken. Dieses Ausgangssignal ist proportional zu der über das Zwischenstück 5 an einer Meßschiene eingeleiteten Kraft.

Bei statischer Wägung werden alle Vollbrücken beider Meßschienen parallel geschaltet. Das Gesamtausgangssignal ist proportional zu den über die Zwischenstücke 5 eingeleiteten Kräften. Durch wahlweise Zusammenschaltung bzw. Zu- und Abschaltung von Meßwertaufnehmern 7 ist es möglich, die Meßlänge der Wägevorrichtung zu variieren. Die Mindestmeßlänge ist hierbei durch den Abstand von zwei die Meßschienen 6 abstützenden Schwellen 2' gegeben. Für die maximale Meßlänge bestehen praktisch keine Beschränkungen.

Die abschnittsweise Zusammenschaltung von Meßwertaufnehmern 7 ist abhängig von der Meßaufgabe, z. B. von der Länge des Schienenfahrzeugs oder der Anordnung und/oder Zahl der zu erfassenden Achsen oder Räder.

Bei dynamischen Messungen bzw. Fahrwägungen werden bei Achslast-Bestimmung die insgesamt zu Zwischenstück 5 gehörenden Meßstellen an zwei Meßschienen 6, bei Radlast-Bestimmung die symmetrisch zu einem Zwischenstück 5 angeordneten Meßstellen an einer Meßschiene 6 parallel geschaltet.

Die Genauigkeit der ermittelten Meßwerte hängt von der Anzahl der auf der Meßstrecke vorhandenen Meßstellen ab. Die durch ein Rad bzw. durch eine Achse hervorgerufene Belastung wird während der Überfahrt mehrmals gemessen und durch eine entsprechend angepaßte Elektronik, z. B. durch Mittelwertbildung, Filterung, Glättung usw., ausgewertet.

Die Wägevorrichtung kann auch so ausgebildet werden, daß Fahrtwägungen in beiden Fahrtrichtungen möglich sind. Hierzu werden die Meßwertaufnehmer der jeweiligen Fahrtrichtung entsprechend so geschaltet, daß die Meßsignale in der richtigen zeitlichen bzw. durch die Fahrtrichtung bedingten Reihenfolge erhalten werden.

## Patentansprüche

1. Wägevorrichtung für die statische und dynamische Wägung von Schienenfahrzeugen mit Fahrschienen und Meßwertaufnehmern zur Ermittlung der auf die Fahrschienen wirkenden Rad-, Achsund/oder Gesamtlast, bei der die Meßschienen über Stützelemente auf dem Gleisfundament oder der Schienenbettung abgestützt sind, dadurch gekennzeichnet, daß die Stützelemente als Schwellen (2) oder schwellenartige Stützkörper ausgebildet sind, die seitlich über die Meßschienen (6) hinausragen und daß die Meßwertaufnehmer (7) seitlich an oder in den Meßschienen (6) angeordnet sind.

2. Wägevorrichtung nach Anspruch 1, dadurch gekennzeichnet, dab die Meßwertaufnehmer (7) in Ausnehmungen oder Taschen (8) der Meßschienen (6) angeordnet und als Dehnungsmeßstreifen, vorzugsweise Schubspannungsmeßstreifen, ausgebildet sind.

3. Wägevorrichtung nach Anspruch 1 oder 2, dadurch gekennzeichnet, daß zwischen zwei Schwellen (2') der Meßschienen (6) jeweils zwei Meßwertaufnehmer (7) auf einer oder auf jeweils beiden Seiten der Meßschienen (6) angeordnet sind und daß die Zwischenstücke (5) zur Abstützung der Fahrschienen (3) auf dem Meßschienen (6) mittig zwischen den Meßwertaufnehmern (7) angeordnet sind.

4. Wägevorrichtung nach Anspruch 1, 2 oder 3, dadurch gekennzeichnet, daß das Meßsignal einzelner oder aller Meßwertaufnehmer (7) beim Wägevorgang aufsummiert wird.

5. Wägevorrichtung nach einem der vorhergehenden Ansprüche, dadurch gekennzeichnet, daß die Länge der Meßschienen (6) sowie die Anzahl der Meßwertauf nehmer (7) an die jeweilige Aufgabenstellung anpaßbar ist, wobei für statische Wägungen die Länge des zu wägenden Objekts und für dynamische Wägungen die angestrebte Genauigkeit, die Eigenfrequenz des zu wägenden Objekts und die Fahrgeschwindigkeit maßgebend ist.

6. Wägevorrichtung nach einem der Ansprüche 1 bis 5, dadurch gekennzeichnet, daß die Meßwertaufnehmer (7) abschnittsweise zusammenschaltbar sind sowie einzeln oder abschnittsweise zu- und abschaltbar sind.

## Claims

1. Weighing device for the static and dynamic weighing of rail vehicles with tracks and transducers for the determination or the wheel, axial and/or total load acting on the tracks, in which the measurement rails are supported via support elements on the track foundations or the track bedding, characterised in that the support elements are designed as sleepers (2) or sleeper-type supports which project laterally beyond the measurement rails (6) and that the transducers (7) are disposed laterally on or in the measurement rails (6).

2. Weighing device according to claim 1, characterised in that the transducers (7) are disposed in recesses or pockets (8) of the measurement rails (6) and are designed as strain gauges, preferably shearing strain gauges.

3. Weighing device according to claim 1 or 2, characterised in that between two sleepers (2') of the measurement rails (6) are disposed in each case two transducers (7) on one or both sides of the measurement rails (6) and that the intermediate pieces (5) for supporting the tracks (3) on the measurement rails (6) are diposed centrally between the transducers (7).

4. Weighing device according to claim 1, 2 or 3, characterised in that the measurement signal of individual or all transducers (7) is summed up during the weighing process.

5. Weighing device according to one one of the foregoing claims, characterised in that the length of the measurement tracks (6) and the number of the transducers (7) is adjustable to the respective task in hand, the length of the object to be weighed being determinative for static weighings, and the desired accuracy, the natural frequency of the object to be weighed and the travelling speed being determinative for dynamic weighings.

6. Weighing device according to any one of claims 1 to 5, characterised in that the transducers (7) are connectable together in groups and are connectable and disconnectable individually or in groups.

**Revendications**

1. Dispositif pour le pesage statique et dynamique de véhicules sur rails comportant des rails de roulement et des capteurs de mesure dans le but de déterminer le poids appliqué par roue, par essieu, et/ou par l'ensemble, les rails de mesure étant soutenus sur le fondement des voies ou le ballast des rails par des éléments de support, caractérisé en ce que les éléments de support sont réalisés sous la forme de traverses (2) ou de corps de support en forme de traverses, qui dépassent latéralement au-dessus des rails de mesure (6), et en ce que les capteurs de mesure (7) sont disposés latéralement sur ou dans les rails de mesure (6).

2. Dispositif de pesage selon la revendication 1, caractérisé en ce que les capteurs de mesure (7) sont disposés dans des creux ou des poches (8) des rails de mesure (6), et sont réalisés sous la forme de jauges extensométriques, de préférence de jauges de mesure de compression.

3. Dispositif de pesage selon la revendication 1 ou 2, caractérisé en ce qu'entre deux traverses (2') des rails de mesure (6), on dispose chaque fois deux capteurs de mesure (7) sur un ou sur chacun des deux côtés des rails de mesure (6), et en ce que les pièces intermédiaires (5) servant à soutenir les rails de roulement (3) sont disposées sur les rails de mesure (6), au milieu entre les capteurs de mesure (7).

4. Dispositif de pesage selon la revendication 1, 2, ou 3, caractérisé en ce qu'on totalise les signaux des capteurs de mesure (7) individuels ou de tous les capteurs lors du processus de pesage.

5. Dispositif de pesage selon l'une des revendications précédentes, caractérisé en ce que la longueur des rails de mesure (6) ainsi que le nombre des capteurs de mesure (7) sont susceptible d'être adaptés au problème posé, la longueur de l'objet à peser, pour des pesages statiques, et la précision visée, pour des pesages dynamiques, la fréquence propre de l'objet à peser et la vitesse de roulement, étant déterminantes.

6. Dispositif de pesage selon une des revendications 1 à 5, caractérisé en ce que les capteurs de mesure (7) sont susceptibles d'être interconnectés par sections, ainsi que connectables et déconnectables individuellement ou par sections.